# EUROPÄISCHE PATENTSCHRIFT

(11) **EP 1 529 813 B1**
(45) Veröffentlichungstag und Bekanntmachung des Hinweises auf die Patenterteilung: **21.12.2005**
(21) Anmeldenummer: 04025051.6
(22) Anmeldetag: 21.10.2004
(51) Int. Cl.: C08L 83/14, C08L 101/10, C08G 77/50, C08G 77/42

(54) **Verfahren zur Erhöhung der Elastizität von feuchtigkeitshärtbaren Elastomeren**
Method for increasing elasticity of moisture curing elastomers
Méthode d'augmentation de l'élasticité d'élastomères réticulables à l'humidité

(30) Priorität: 06.11.2003 DE 10351804
(43) Veröffentlichungstag der Anmeldung: 11.05.2005
(73) Patentinhaber: Wacker-Chemie GmbH, 81737 München (DE)
(72) Erfinder: Schindler, Wolfram , Dr., 84577 Tüssling (DE); Schwiebacher, Elke, 84359 Simbach (DE)
(74) Vertreter: Fritz, Helmut

(56) Entgegenhaltungen:
- WO-A-02/066532

## Beschreibung

Die Erfindung betrifft ein Verfahren zur Erhöhung der Elastizität von feuchtigkeitsgehärteten Elastomeren aus alkoxyvernetzenden einkomponentigen Massen.

Organische Polymere mit Silanendgruppen in Form von einkomponentigen mit Luftfeuchtigkeit aushärtenden Massen (RTV-1) sind bekannt und werden vielfach zur Herstellung von elastischen Dicht- und Klebstoffen verwendet. Derartige Polymere können aus unterschiedlichen Bausteinen aufgebaut sein. Üblicherweise sind dies Polyurethane, Polyether, Polyester, Polyacrylate, Polyvinylester, Ethylen-Olefincopolymere, Styrol-Butadiencopolymere oder Polyolefine. Es ist bekannt, dass zur Stabilisierung bei der Verarbeitung und Lagerung der Compounds diesen einkomponentigen Massen niedermolekulare Verbindungen zugesetzt werden, die über hydrolysierbare Gruppen verfügen, die eine höhere Reaktivität gegenüber Wasser als die silanterminierten Polymere haben. Die Menge an zugesetzten Wasserfängern richtet sich nach dem Wassergehalt der Bestandteile der Rezeptur und nach den gewünschten Lagerstabilitäten und Verarbeitungszeiten. Meist sind dies organofunktionelle Silane, wobei der organische Rest vielfach ausschlaggebend für die Reaktivität ist. Beispiele für solche Silane sind Vinyltrimethoxysilan, Alkylaminopropyltrimethoxysilane aber auch beispielsweise unter Bildung von Ammoniak wasserbindende Silane wie Hexamethyldisilazan.

Beispiele für alkoxysilanterminierte Polymere mit organischem Rückgrat und Verfahren zur Herstellung von vernetzbaren Massen sind z.B. in EP-A-269 819, EP-A- 370 464, EP-A-565 078, EP-A-931 800, WO 00/37533, US-A-3,971,751 oder DE-A-198 49 817 beschrieben. Ebenso gilt dies für Organosiloxane in einer Vielzahl von Patenten und Veröffentlichungen (z.B. WO 99/06486).

Meist werden für die Endterminierung in organischen Polymersystemen substituierte Propyltrimethoxysilane eingesetzt, da sie in der Regel günstig verfügbar sind und in den Massen eine sehr gute Reaktivität aufweisen. Allerdings sind diese Polymere, bedingt durch die hohe Reaktivität auch problematisch hinsichtlich der Verarbeitung, z.B. bei der Einarbeitung von wasserhaltigen Füllstoffen oder auch Additiven, die die Reaktivität weiter erhöhen, ferner sind die Lagerstabilitäten vielfach unzureichend.
Beispielsweise kann der Zusatz von größeren Mengen an Aminosilanen als Haftvermittler die Lagerstabilität stark verringern. Die Massen müssen meist über weitere Zusatzkomponenten, wie beispielsweise die in DE 19923300 beschriebenen Phosphorsäureester, stablisiert werden, um die Katalysatoraktivität zu moderieren. Auch der Zusatz von Standard-Wasserfängern wie Vinyltrimethoxysilan ist nur bedingt geeignet um die Massen zu stabilisieren.

Neuartige Systeme verwenden neben den propylgespacerten Silanen auch sogenannte alpha-Silane als vernetzbare Gruppen für die Endblockierung der Polymere wie beispielsweise in WO 02/066532 oder WO 03/018658 beschrieben. Dabei können in diesen Systemen auch hochreaktive difunktionelle und sogar monofunktionelle Endgruppen wie in WO 03/059981 beschrieben eingebaut werden, die wesentliche Vorteile für die Elastizität bringen.

Ein wesentlicher Nachteil besteht bei vielen Systemen in dem gegenläufigen Effekt zwischen Kettenlänge bzw. Molekulargewicht des zu verwendenden Polymers und den Verarbeitungseigenschaften hinsichtlich der Viskosität. Hohe Molekulargewichte sind nicht nur wegen der damit verbunden höheren mechanischen Festigkeit von Interesse sondern auch zur Herstellung von niedermoduligen Elastomeren, wie sie vor allem in Dichtstoffen gefordert sind, eine wichtige Voraussetzung. Können in derartigen Massen niederviskosere Polymere verwendet werden, so wird die Einstellung der Verarbeitungseigenschaften deutlich einfacher und flexibler. Problematisch ist dies speziell auch bei silanterminierten Polyurethanen. Hier ist die Herstellung von niedermoduligen Massen praktisch kaum mehr möglich, ohne in der Regel durch Weichmacherzusätze die mechanischen Eigenschaften deutlich zu verschlechtern.

Von großem Vorteil wären daher alkoxysilanterminierte Polymersysteme, die bei der Aushärtung nicht nur Vernetzen, sondern auch eine Kettenverlängerung der Polymere bewirken. Ein erfolgreicher Ansatz ist der Einbau von difunkionellen Silanendgruppen in die Polymere. Im Falle der alpha-Silane ist die Reaktivität derartiger Massen auch so hoch, dass auf den Einsatz größerer Mengen an Katalysatoren (meist zinnhaltig) verzichtet werden kann.

Gegenstand der Erfindung ist ein Verfahren zur Erhöhung der Elastizität von feuchtigkeitsgehärteten Elastomeren, bei dem alkoxyvernetzende einkomponentige Massen, die ein
(A) alkoxysilanterminiertes Polymer mit Endgruppen der allgemeinen Formel (1)

   - A-Si(R)ₐ(CH₃)₃₋ₐ (1)

   enthalten, mit
(B) Silan, der allgemeinen Formel (2)

   X-CH₂-Si (R)₂(CH₃) (2)
versetzt werden, wobei
- **A**: eine zweibindiger Kohlenwasserstoffrest,
- **R**: eine Methoxy- oder Ethoxygruppe,
- **X**: eine Gruppe R"O-, R"NH-, R'-O-CO-NH-, R'-NH-CO-NH- oder Halogen,
- **R"**: Wasserstoff, einen gegebenenfalls halogensubstuierten C₁₋₁₈- Kohlenwasserstoffrest einen Rest R'-O-CO- oder R'-NH-CO-,
- **R**': einen gegebenenfalls halogensubstuierten C₁₋₈-Kohlenwasserstoffrest und
- **a**: Werte 1, 2 oder 3 bedeuten.

Die ausgehärteten Massen auf Basis Alkoxyorganosilanterminierter Polymere (A) weisen eine ausgezeichnete Elastizität auf. Gleichzeitig weisen die Massen gute Lagerstabilität bei hervorragender Härtungscharakteristik auf. Es hat sich nämlich gezeigt, dass der Zusatz von difunktionellen Silanen mit Methylenspacer (alpha-Silane) der allgemeinen Formeln (2) zu Polymeren (A) geeignet ist, derartige Massen elastischer einzustellen wobei die Lagerstabilität nicht verschlechtert wird. Ferner findet man auch keinen negativen Einfluss auf die Härtungskinetik und die Durchhärtung der Materialien. Dies bestätigen gute Werte bei Hautbildungszeiten, Restklebrigkeit etc.. Im Gegensatz zu den bisherigen bekannten Verbindungen ist es aufgrund der sehr hohen Reaktivität der Silane der allgemeinen Formel (2) möglich geworden, diese Silane als difunktionelle Wasserfänger zuzusetzen.

Da die Silane der allgemeinen Formel (2) eine hinreichend hohe Reaktivität zeigen, sind die Hautbildungs- und Durchhärtungszeiten nur wenig abhängig von der Silanmenge. Damit können Massen hergestellt werden, die auch in Anwesenheit von größeren Wassermengen, welche z.B. aus den Füllstoffen bei der Lagerung austreten, stabilisiert sind, ohne die Durchhärtung deutlich zu verschlechtern.

Die Polymere (A) enthalten vorzugsweise ein Grundgerüst aus Polyurethan, Polyether, Polyester, Polyacrylat, Polyvinylester, Ethylen-Olefincopolymer, Styrol-Butadiencopolymer oder Polyolefin.

Die Polymere (A), die ein Grundgerüst aus Polyether, Polyester oder Polyurethan aufweisen, besitzen vorzugsweise Molmassen Mn von 5000 - 50000, insbesonere 10000 - 25000.

Die Polymere (A) weisen vorzugsweise Viskositäten von höchstens 200 Pas, insbesondere höchstens 100 Pas bei 25°C auf.

In den vorstehenden allgemeinen Formeln (1) und (2) bedeuten bevorzugt:
- **R**": Wasserstoff, einen gegebenenfalls halogensubstuierten cyclischen, linearen oder verzweigten C₁₋₁₈-Alkylrest, insbesondere C₁₋₆-Alkylrest, oder C₆₋₁₈-Arylrest, insbesondere C₆₋₁₀-Arylrest, speziell Butyl-, Cyclohexyl-oder Phenylrest,
- **R**': einen C₁₋₄-Alkyl- oder Phenylrest, speziell Methyl- oder Ethylrest,
- **A**: einen zweibindigen linearen oder verzweigten Alkylrest, vorzugsweise mit 1 bis 18, insbesondere mit 1 bis 6 C-Atomen, insbesondere eine Methylen oder eine Trimethylengruppe und
- **a**: 2 oder 3.

Zur Herstellung der silanterminierten Polymere (A) sind eine Vielzahl von Möglichkeiten bekannt, insbesondere:
- Copolymerisation von ungesättigten Monomeren mit solchen, die z.B. Alkoxysilylgruppen, wie Vinyltrimethoxysilan aufweisen.
- Aufpfropfung von ungesättigten Monomeren wie Vinyltrimethoxysilan auf Thermoplaste wie Polyethylen.
- Die Addition von H-Silanen wie Methyldimethoxysilan an die Kohlenstoff-Doppelbindungen unter Edelmetallkatalyse.
- Umsetzung von Organosilanen mit Präpolymeren. Hierbei wird eine funktionelle Gruppe des Präpolymeren mit einer funktionellen Gruppe des Silans umgesetzt.

Der vielfach beschrittene und einfachste Weg für den zuletzt genannten Fall ist eine Umsetzung von NCO-Gruppen eines Isocyanat-Präpolymeren mit einem Aminosilan der allgemeinen Formel (3):

R¹-NH-A-Si(R)ₐ(CH₃)₃₋ₐ (3)

Ferner können entsprechend OH-Gruppen eines Polyurethan-Präpolymers, aber auch von unterschiedlichsten anderen Polymergrundbausteinen wie z.B. reinen Polyethern mit einem Isocyanatosilan der allgemeinen Formel (4) umgesetzt werden:

OCN-A-Si(R)ₐ (CH₃)₃₋ₐ (4)

In den allgemeinen Formeln (3) und (4) bedeuten
- **R**^{**1**}: Wasserstoff oder einen gegebenenfalls mit Halogen substituierten Alkylrest mit 1 bis 18, insbesondere 1 bis 6 C-Atomen, oder Arylrest mit 6 bis 18, insbesondere 6 bis 10 C-Atomen,
- **A**, **R** und **a**: weisen die vorstehenden Bedeutungen auf.

Vorzugsweise bedeuten **A** in den allgemeinen Formeln (3) und (4) Trimethylen, **R** Methoxy, **R**¹ Phenyl, Cyclohexyl oder einen linearen Alkylrest, wie Ethyl oder Butyl und **a** hat den Wert 3.

In einer bevorzugten Ausführungsform weist das alkoxysilanterminierte Polymer (A) Endgruppen der allgemeinen Formel (5),

-NR¹-CH₂-Si(R)ₐ(CH₃)₃₋ₐ (5)

auf.

Dieses kann analog zu den oben beschriebenen Verfahren hergestellt werden durch Umsetzung von NCO-Gruppen eines Isocyanat-Präpolymeren mit einem Aminosilan der allgemeinen Formel (6):

R¹NH-CH₂-Si(R)ₐ(CH₃)₃₋ₐ (6)

Ferner können entsprechend OH-Gruppen eines Isocyanat-Präpolymeren, aber auch von unterschiedlichsten anderen Polymergrundbausteinen wie z.B. reinen Polyethern mit einem Isocyanatosilan der allgemeinen Formel (7) umgesetzt werden.

OCN-CH₂-Si(R)ₐ(CH₃)₃₋ₐ (7)

In den allgemeinen Formeln (5) und (6) und (7) haben **R**¹, **R,** und **a** die vorstehenden Bedeutungen. Vorzugsweise bedeuten **R**¹ Phenyl, Cyclohexyl oder ein linearer C₁₋₄-Alkylrest wie Ethyl oder Butyl und **a** die Werte 2 oder 3.

Bei silanterminierten Polymeren (A) mit Endgruppen der allgemeinen Formel (5) hat sich gezeigt, dass diese aufgrund ihrer sehr hohen Reaktivität sehr schwierig zu compoundieren sind. Dabei führt der Wassergehalt gängiger Füllstoffe und Additive vielfach bereits zum Gelieren des Masse während der Abmischung, die dann zu meist kaum noch verarbeitbar sind. Ferner sind diese Massen hinsichtlich ihrer Lagerstabilität problematisch und können über längere Zeit nicht gelagert werden (i.d.R. Verstrammung in der Kartusche). Der Versuch, diese Massen bei der Herstellung mit den oben beschriebenen Standard-Wasserfängern zu stabilisieren, führte zu keinem Erfolg.

Im Gegensatz zu den bisherigen Wasserfängern sind aufgrund der sehr hohen Reaktivität der Silane der allgemeinen Formeln (2), silanterminierte Polymere (A) mit Endgruppen der allgemeinen Formel (5) hinsichtlich der Verarbeitung ausreichend lange stabilisierbar ohne zu gelieren. Die Verarbeitungszeit kann auch hier durch die zugesetzte Silanmenge eingestellt werden. Die Verarbeitungszeiten, die Hautbildungszeit und die Durchhärtung bleiben aber sehr schnell.

Als Polymere (A) können auch Polymere mit einem Grundgerüst aus Polydiorganosiloxan und Endgruppen der allgemeinen Formel (1) eingesetzt werden. Vorzugsweise werden dabei Silane der allgemeinen Formel (6) an Hydroxyalkyl- oder Aminoalkylendständige Siliconöle addiert.

Gängige Siliconpolymere, hergestellt durch Endblockierung von Si-OH-terminierten Siliconölen mit alkoxyfunktionellen Silanen wie Vinyltrimethoxysilan oder Methyltrimethoxysilan sind als weitere Ausführungform anstelle der Polymere (A) ebenso einsetzbar.

Beispiele für organofunktionelle Silane (B) der allgemeinen Formel (2) sind Aminomethyl-methyldimethoxysilan, Aminomethylmethyldiethoxysilan, Phenylaminomethyl-methyldimethoxysilan, Butylaminomethyl-methyldimethoxysilan, Cyclohexylaminomethylmethyldimethoxysilan, Methoxymethyl-methyldimethoxysilan, Ethoxymethyl-methyldiethoxysilan, Methylcarbamatomethyl-methyldimethoxysilan, Ethylcarbamatomethyl-methyldiethoxysilan, oder Chlormethyl-methyldimethoxysilan.
Bevorzugt sind dabei Cyclohexylaminomethylmethyldimethoxysilan, Phenylaminomethyl-methyldimethoxysilan und die entsprechenden Ethoxyderivate, besonders bevorzugt Methylcarbamatomethyl-methyldimethoxysilan, Ethylcarbamatomethylmethyldiethoxysilan, die aufgrund ihrer geringeren Basizität keinen zusätzlichen beschleunigenden Einfluss auf die Reaktivität haben.

Auf 100 Gewichtsteile Polymer (A) werden den Massen vorzugsweise 0,1 bis 20 Gewichtsteile, besonders bevorzugt 0,5 bis 10 Gewichtsteile, insbesondere 2 bis 6 Gewichtsteile Silane (B) zugesetzt.

Den Massen können als Komponente (C) ein Katalysator zur Aushärtung zugesetzt werden. Als Komponente (C) können sauer Verbindungen wie Phosphorsäurederivat oder Carbonsäurederivate, basische Verbindungen wie primäre, sekundäre und tertiäre Amine oder auch metallorganischen Katalysatoren beispielsweise der Metalle Zinn, Titan, Zink oder Bismuth eingesetzt werden. Ferner können auch organische Stickstoffverbindungen eingesetzt werden, die eine Silylgruppe tragen. Geeignete Basen mit einer Silylgruppe sind beispielsweise aminogruppenhaltige Silane wie Aminopropyl-trimethoxysilan, Aminopropyl-triethoxysilan, Aminomethyl-trimethoxysilan, Aminomethyl-triethoxysilan, Aminoethylaminopropyl-trimethoxysilan, Butylaminopropyltrimethoxysilan, Butylaminomethyl-trimethoxysilan, Cyclohexylaminomethyl-trimethoxysilan, Cyclohexylaminopropyltrimethoxysilan.

Den Massen können ferner als Komponente (D) an sich bekannte Hilfsstoffe, wie Haftvermittler, Weichmacher, Füllstoffe, Thixotropiermittel, Lichtschutzmittel, Fungizide und Pigmente zugesetzt werden, die für den Einsatz in alkoxyvernetzenden einkomponentigen Massen bekannt sind.

Alle vorstehenden Symbole der vorstehenden Formeln weisen ihre Bedeutungen jeweils unabhängig voneinander auf. In allen Formeln ist das Siliciumatom vierwertig.

Die folgenden Beispiele dienen der Erläuterung der Erfindung ohne diese zu beschränken. Soweit nicht anders angegeben sind alle Mengen- und Prozentangaben auf das Gewicht bezogen, alle Drücke 0,10 MPa (abs.) und alle Temperaturen 20°C.

### Beispiele

Es wurden alkoxyvernetzende einkomponentige Massen hergestellt. Alkoxysilanterminierte Polyether (A) wurden gemäß WO 03/018658 hergestellt, unter Verwendung eines difunktionellen Polyethers mit hohem OH-Funktionalisierungsgrad (Accalim® 12200N, erhältlich von der Bayer-AG).
Die zur Endterminierung eingesetzten Isocyanatosilane 3-Isocyanatopropyl-trimethoxysilan für Polymer A1 und Isocyanatomethyl-methyldimethoxysilan für Polymer A2 wurden gemäß DE 100 640 86 hergestellt.
Als Wasserfänger-Silane wurden eingesetzt Methylcarbamatomethyl-trimethoxysilan (GENIOSIL® XL 63) Methylcarbamatomethyl-methyldimethoxysilan (Silan (B), GENIOSIL® XL 65) Vinyl-trimethoxysilan (GENIOSIL® XL 10) erhältlich von der Wacker-Chemie GmbH.

| Basisformulierung (in Gew.-%) | |
|---|---|
| Silanterminiertes Polymer A1/A2 | 40,0 |
| Diisodecylphthalat | 10,0 |
| Kieselsäure Wacker HDK® H2000 | 9,0 |
| Kreide Omya® BLR3 | 40,0 |
| Dibutylzinndilaurat | 0,10 |
| N-(2-aminoethyl)(-3-aminopropyl)trimethoxysilan (GENIOSIL® GF 91) | 0,50 |
| Wasserfänger: GENIOSIL® XL63, GENIOSIL® XL65, GENIOSIL® XL10 | additiv (variabel) |

Die Abmischung erfolgte in einem Labormischer der Fa. Hauschild (Speed Mixer DAC 150 AF). Die Silane wurden dabei vor Zugabe der Füllstoffe (Kreide, Kieselsäure) eingearbeitet. Die Zugabe der Katalysatoren Dibutylzinndilaurat und GENIOSIL® GF 91 erfolgte als letzter Schritt. Mischzeiten für die einzelnen Schritte: 20 s / 2500 rpm, 60 s / 2500 rpm, 60 s / 2500 rpm. Die mechanischen Eigenschaften wurden nach DIN 53504 (Zugprüfung) und DIN 53505 (Härte Shore A) bestimmt.

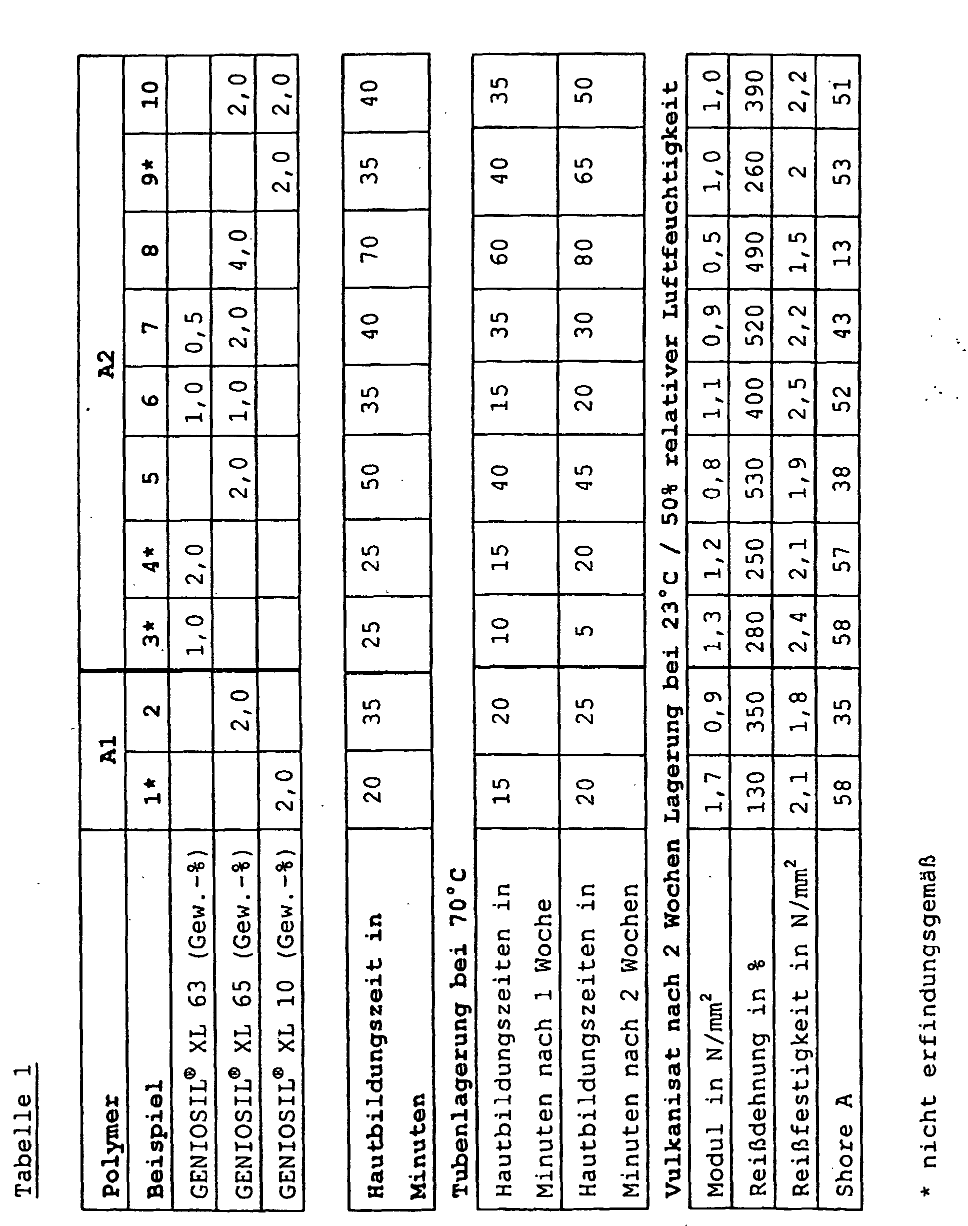

## Patentansprüche

1. Verfahren zur Erhöhung der Elastizität von feuchtigkeitsgehärteten Elastomeren, bei dem alkoxyvernetzende einkomponentige Massen, die ein
(A) alkoxysilanterminiertes Polymer mit Endgruppen der allgemeinen Formel (1)
- A-Si(R)ₐ(CH₃)₃₋ₐ (1)
enthalten, mit
(B) Silan, der allgemeinen Formel (2)
X-CH₂-Si(R)₂(CH₃) (2)
versetzt werden, wobei
**A** eine zweibindiger Kohlenwasserstoffrest,
**R** eine Methoxy- oder Ethoxygruppe,
**X** eine Gruppe R"O-, R"NH-, R'-O-CO-NH-, R'-NH-CO-NH- oder Halogen,
**R**" Wasserstoff, einen gegebenenfalls halogensubstuierten C₁₋₁₈- Kohlenwasserstoffrest einen Rest R'-O-CO- oder R'-NH-CO-,
**R**' einen gegebenenfalls halogensubstuierten C₁₋₈-Kohlenwasserstoffrest und
**a** Werte 1, 2 oder 3 bedeuten.

2. Verfahren nach Anspruch 1, bei denen das alkoxysilanterminierte Polymer (A) Endgruppen der allgemeinen Formel (5),
-NR¹-CH₂-Si(R)ₐ(CH₃)₃₋ₐ (5)
aufweist, wobei
**R**, **R**'' und **a** die die in Anspruch 1 angegebenen Bedeutungen aufweisen.

3. Verfahren nach Anspruch 1 oder 2, bei dem auf 100 Gewichtsteile Polymer (A) 0,1 bis 20 Gewichtsteile Silan (B) eingesetzt wird.

4. Verfahren nach Anspruch 1 bis 3, bei dem als Komponente (C) ein Katalysator zur Aushärtung eingesetzt wird.

5. Verfahren nach Anspruch 1 bis 4, bei dem die Polymere (A) ein Grundgerüst aufweisen, das ausgewählt wird aus Polyurethan , Polyether, Polyester, Polyacrylat, Polyvinylester, Ethylen-Olefincopolymer, Styrol-Butadiencopolymer und Polyolefin.

6. Verfahren nach Anspruch 1 bis 5, bei dem die Polymere (A) ein Grundgerüst aus Polydiorganosiloxan aufweisen.

## Claims

1. Method of increasing the elasticity of moisture-cured elastomers, which comprises adding to alkoxy-crosslinking one-component compositions comprising an
(A) alkoxysilane-terminated polymer containing end groups of the general formula (1)
- A-Si(R)ₐ (CH₃)₃₋ₐ (1)
(B) silane, of the general formula (2)
X-CH₂-Si (R)₂ (CH₃) (2)
where
**A** is a divalent hydrocarbon radical,
**R** is a methoxy or ethoxy group,
**X** is a group R"O-, R"NH-, R'-O-CO-NH-, R'-NH-CO-NH- or halogen,
**R**" is hydrogen, an optionally halogen-substituted C₁₋₁₈ hydrocarbon radical or a radical R'-O-CO- or R'-NH-CO-,
**R'** is an optionally halogen-substituted C₁₋₈ hydrocarbon radical, and
**a** is 1, 2 or 3.

2. Method according to Claim 1, wherein the alkoxysilane-terminated polymer (A) comprises end groups of the general formula (5),
-NR¹-CH₂-Si(R)ₐ(CH₃)₃₋ₐ (5)
where **R**, **R"** and **a** are as defined in Claim 1.

3. Method according to Claim 1 or 2, wherein from 0.1 to 20 parts by weight of silane (B) are used per 100 parts by weight of polymer (A).

4. Method according to any one of Claims 1 to 3, wherein as component (C) a catalyst for curing is used.

5. Method according to any one of Claims 1 to 4, wherein the polymers (A) have a framework selected from the group consisting of polyurethane, polyether, polyester, polyacrylate, polyvinyl ester, ethylene-olefin copolymer, styrene-butadiene copolymer and polyolefin.

6. Method according to any one of Claims 1 to 5, wherein the polymers (A) have a framework of polydiorganosiloxane.

## Revendications

1. Procédé pour augmenter l'élasticité d'élastomères durcis sous l'effet de l'humidité, dans lequel des masses à un composant, réticulant par alcoxy, qui contiennent
(A) un polymère terminé par alcoxysilane avec des groupements terminaux de formule générale (1)
-A-Si (R)ₐ(CH₃)₃₋ₐ (1)
sont mélangées avec
(B) un silane de formule générale (2)
X-CH₂-Si(R)₂(CH₃) (2)
où
A signifie un radical hydrocarboné divalent,
R signifie un groupement méthoxy ou éthoxy,
X signifie un groupement R"O-, R"NH-, R'-O-CO-NH-, R'-NH-CO-NH- ou halogène,
R" signifie hydrogène, un radical hydrocarboné en C₁ à C₁₈ le cas échéant substitué par halogène, un radical R'-O-CO- ou R'-NH-CO-,
R' signifie un radical hydrocarboné en C₁ à C₈ le cas échéant substitué par halogène et
a vaut 1, 2 ou 3.

2. Procédé selon la revendication 1, dans lequel le polymère terminé par alcoxysilane (A) présente des groupements terminaux de formule générale (5),
-NR¹-CH₂-Si(R)ₐ(CH₃)₃₋ₐ (5)
où
R, R" et a ont les significations indiquées dans la revendication 1.

3. Procédé selon la revendication 1 ou 2, dans lequel on utilise, par 100 parties en poids de polymère (A), 0,1 à 20 parties en poids de silane (B).

4. Procédé selon les revendications 1 à 3, dans lequel on utilise comme composant (C) un catalyseur pour le durcissement.

5. Procédé selon les revendications 1 à 4, dans lequel les polymères (A) présentent une structure de base choisie parmi les structures polyuréthane, polyéther, polyester, polyacrylate, poly(ester de vinyle), copolymère d'éthylène-oléfine, copolymère de styrène-butadiène et polyoléfine.

6. Procédé selon les revendications 1 à 5, dans lequel les polymères (A) présentent une structure de base de polydiorganosiloxane.
